# EUROPEAN PATENT APPLICATION

(11) **EP 4 231 701 A1**
(43) Date of publication of application: **23.08.2023**
(21) Application number: 21879493.1
(22) Date of filing: 14.10.2021
(51) Int. Cl.: H04W 28/04

(54) **REPETITIVE TRANSMISSION METHOD AND APPARATUS FOR CONFIGURED GRANT, DEVICE, AND READABLE STORAGE MEDIUM**

(30) Priority: 15.10.2020 CN 202011105261
(71) Applicant: Vivo Mobile Communication Co., Ltd., Dongguan, Guangdong 523863 (CN)
(72) Inventor: SUN, Rongrong, Dongguan, Guangdong 523863 (CN); SUN, Peng, Dongguan, Guangdong 523863 (CN); LIU, Hao, Dongguan, Guangdong 523863 (CN)
(74) Representative: Lavoix
(86) International application number: PCT/CN2021/123820
(87) International publication number: WO 2022/078451

(57) **Abstract**

This application discloses a method and apparatus for repetition with configured grant, a device, and a readable storage medium. This method includes: obtaining a first configured grant configured by a network side, where the first configured grant is configured with at least two sets of first information; and repetition of a transport block based on the at least two sets of first information.

## Description

### CROSS-REFERENCE TO RELATED APPLICATIONS

This application claims priority to Chinese Patent Application No. 202011105261.1, filed in China on October 15, 2020, which is incorporated herein by reference in its entirety.

### TECHNICAL FIELD

This application pertains to the field of communication technologies, and specifically relates to a method and apparatus for repetition with configured grant, a device, and a readable storage medium.

### BACKGROUND

In communication systems, repetition with configured grant (configured grant) is supported to meet ultra reliability and low latency requirements of ultra-reliable and low latency communication (Ultra-reliable and Low Latency Communication, URLLC) services. According to related protocols, repetition is restricted to be performed on one configured grant configuration. If a configured grant link for uplink repetition is blocked, reliability of data transmitted with such configured grant cannot be guaranteed. When detecting errors in data transmission with a configured grant, a network side sends downlink control information (Downlink Control Information, DCI) to dynamically schedule a data repetition on the configured grant. This mechanism can guarantee data transmission reliability to some extent but brings high latency.

### SUMMARY

Embodiments of this application provide a method and apparatus for repetition with configured grant, a device, and a readable storage medium, so as to alleviate high latency in repetition with configured grant.

According to a first aspect, a method for repetition with configured grant is provided, applied to a terminal, including:
obtaining a first configured grant configured by a network side, where the first configured grant is configured with at least two sets of first information; and
performing repetition of a transport block based on the at least two sets of first information.

According to a second aspect, a method for repetition with configured grant is provided, applied to a terminal, including:
obtaining at least two configured grants configured by a network side, where the at least two configured grants have a same hybrid automatic repeat request HARQ process identifier; and
performing repetition of a transport block based on the at least two configured grants.

According to a third aspect, a method for repetition with configured grant is provided, applied to a terminal, including:
obtaining DCI used for a network side to schedule physical uplink shared channel; and
in a case that a HARQ process number indicated by the DCI is the same as a HARQ process number of a second configured grant in one time window, performing, on the second configured grant, repetition of a transport block scheduled by the DCI.

According to a fourth aspect, an apparatus for repetition with configured grant is provided, applied to a terminal, including:
a first obtaining module, configured to obtain a first configured grant configured by a network side, where the first configured grant is configured with at least two sets of first information; and
a first transmission module, configured to performing repetition of a transport block based on the at least two sets of first information.

According to a fifth aspect, an apparatus for repetition with configured grant is provided, applied to a terminal, including:
a second obtaining module, configured to obtain at least two configured grants configured by a network side, where the at least two configured grants have a same hybrid automatic repeat request HARQ process identifier; and
a second transmission module, configured to repeat transmission of a transport block based on the at least two configured grants.

According to a sixth aspect, an apparatus for repetition with configured grant is provided, applied to a terminal, including:
a third obtaining module, configured to obtain DCI used for a network side to schedule PUSCH; and
a third transmission module, configured to: in a case that a HARQ process number indicated by the DCI is the same as a HARQ process number of a second configured grant in one time window, perform, on the second configured grant, repetition of a transport block scheduled by the DCI.

According to a seventh aspect, a terminal is provided, including: a processor, a memory, and a program stored on the memory and capable of running on the processor, where when the program is executed by the processor, the steps of the method according to the first aspect, the second aspect, or the third aspect are implemented.

According to an eighth aspect, a readable storage medium is provided, where a program or instructions are stored in the readable storage medium, and when the program or the instructions are executed by a processor, the steps of the method according to the first aspect, the second aspect, or the third aspect are implemented.

According to a ninth aspect, a computer program product is provided, where the computer program product is stored in a non-volatile memory medium, and when the computer program product is executed by at least one processor, the steps of the method according to the first aspect, the second aspect, or the third aspect are implemented.

According to a tenth aspect, a chip is provided, where the chip includes a processor and a communications interface, the communications interface is coupled to the processor, and the processor is configured to run a program or instructions to implement the method according to the first aspect, the second aspect, or the third aspect.

In the embodiments of this application, reliability of data transmission on configured grant can be improved, and latency can be decreased.

### BRIEF DESCRIPTION OF DRAWINGS

FIG. 1 is a block diagram of a wireless communications system to which embodiments of this application are applicable;
FIG. 2 is a first schematic diagram of a method for repetition with configured grant according to an embodiment of this application;
FIG. 3 is a second schematic diagram of a method for repetition with configured grant according to an embodiment of this application;
FIG. 4 is a third schematic diagram of a method for repetition with configured grant according to an embodiment of this application;
FIG. 5 is a schematic diagram of repetition with one configured grant according to embodiment 1 of this application;
FIG. 6 is a schematic diagram of repetition with multiple configured grants according to an embodiment of this application;
FIG. 7 is a schematic diagram of repetition with configured grant combining dynamic scheduling according to an embodiment of this application;
FIG. 8 is a first schematic diagram of an apparatus for repetition with configured grant according to an embodiment of this application;
FIG. 9 is a second schematic diagram of an apparatus for repetition with configured grant according to an embodiment of this application;
FIG. 10 is a third schematic diagram of an apparatus for repetition with configured grant according to an embodiment of this application; and
FIG. 11 is a schematic diagram of a terminal according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that the data used in such a way is interchangeable in appropriate circumstances such that the embodiments of this application can be implemented in other orders than the order illustrated or described herein. Moreover, the objects distinguished by "first" and "second" are usually of one type, and quantities of objects are not limited. For example, the first object may be one or more than one. In addition, "and" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE) or LTE-Advanced (LTE-Advanced, LTE-A) system, but may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" as used in the embodiments of this application are often used interchangeably, and the technology described herein may be used in the above-mentioned systems and radio technologies as well as other systems and radio technologies. However, in the following descriptions, a new radio (New Radio, NR) system is described for illustrative purposes, and NR terms are used in most of the following descriptions, although these technologies may also be applied to other applications than the NR system application, for example, 6th generation (6^{th} Generation, 6G) communications systems.

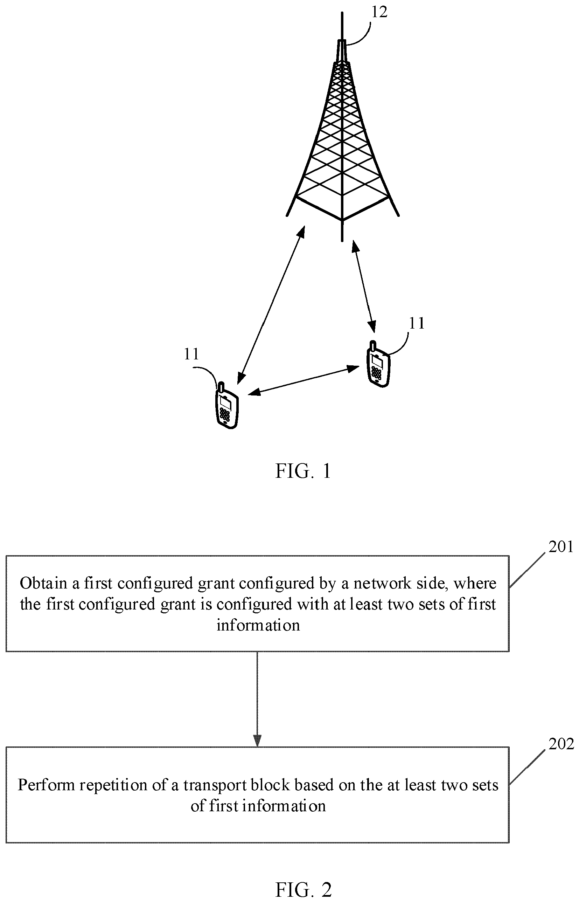

FIG. 1 is a block diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicular user equipment (VUE), or pedestrian user equipment (PUE). The wearable device includes wrist bands, earphones, glasses, or the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (BasicServiceSet, BSS), an extended service set (ExtendedServiceSet, ESS), a NodeB, an evolved NodeB (eNB), a home NodeB, a home evolved NodeB, a WLAN access point, a Wi-Fi node, a transmission-reception Point (transmission-reception Point, TRP), or another appropriate term in the art. Provided that same technical effects are achieved, the base station is not limited to any specific technical term. It should be noted that in the embodiments of this application, the base station in the NR system is merely used as an example, but the base station is not limited to any specific type.

For ease of understanding the embodiments of this application, the following technical points are first described:
(1) Multiple transmission-reception point (Transmission Reception Point, TRP) transmission:
   In a multiple transmission reception point or /multiple antenna panel (multi-TRP/multi-panel) scenario, transmission reliability and throughput performance can be improved. In downlink, a terminal can receive same or different data from multiple TRPs. In uplink, a terminal can send different data to multiple TRPs. Specifically, a plurality of control-resource sets (control-resource set, CORESET) configured by a network side for a terminal are associated with different radio resource control (Radio Resource Control, RRC) parameter control resource set pool indexes (CORESETPoolIndex) corresponding to different TRPs. All TRPs send DCI to schedule respective uplink transmission physical uplink shared channels (Physical Uplink Shared Channel, PUSCH). That is, in the multi-TRP scenario, multiple DCIs (Multi-DCI) are used to schedule PUSCH transmission.
(2) Configuration and activation of configured grant:
   Uplink transmission with configured grant is an uplink transmission scheme having low latency and low overheads. The configured grant is used for ultra-reliable and low latency communication (Ultra-reliable and Low Latency Communication, URLLC) services or other typical service scenarios. The network side can configure and activate multiple type 1 configured grants and/or type 2 configured grants to further satisfy requirements of URLLC services on lower latency and higher reliability.
   The type 1 configured grant can take effect after being configured by RRC, and the type 2 configured grant can take effect only after being activated by DCI. A maximum of 12 configured grant configuration can be configured and activated on one bandwidth part (Bandwidth Part, BWP), and each configuration is identified by one index (for example, a configured grant configuration index in a release 16 communication protocol (configuredGrantConfigIndex-r16)). When the network side configures multiple configured grants, a value of a 4-bit "hybrid automatic repeat request process number (HARQ process number, HPN)" field in the DCI used for activating type 2 configured grant corresponds to a configured grant index and is used to indicate that which type 2 configured grant is specifically activated by the DCI.
(3) Repetition with configured grant
   To further improve reliability of transmission, the configured grant supports repetition) of a transport block (Transport Block, TB). The number of repetitions and a redundancy version (Redundancy version, RV) sequence corresponding to the repetition are configured by RRC. For example, type-A repetition and type-B repetition. In the type-A repetition scheme, a plurality of redundancy versions of one TB are transmitted in a plurality of sequential slots. In the type-B repetition scheme, RRC configures nominal transmissions (including the number of nominal transmissions and the number of orthogonal frequency division multiplex (Orthogonal frequency division multiplex, OFDM) symbols occupied by each repetition). In the case of downlink symbol or slot boundaries, one nominal transmission occasion is divided into a plurality of actual transmission occasions.

However, configured grant supports only repetition on one configured grant, and one configured grant is configured with only one spatial relation. If a configured grant link for repetition is blocked, reliability of transmission cannot be guaranteed.

In addition, because the HARQ process number (HARQ process number, HPN) in the DCI for activating the type 2 configured grant has limited field values, in the existing activation method, a quantity of type 2 configured grants that a terminal can configure cannot exceed a value range of the HPN.

The following describes in detail a method and apparatus for repetition with configured grant, a device, and a readable storage medium provided in the embodiments of this application by using specific embodiments and application scenarios thereof with reference to the accompanying drawings.

Refer to FIG. 2, which shows a method for repetition with configured grant provided in an embodiment of this application. The method is performed by a terminal, including specific steps: step 201 and step 202.

Step 201: Obtain a first configured grant configured by a network side, where the first configured grant is configured with at least two sets of first information.

Step 202: Perform repetition of a transport block based on the at least two sets of first information.

That is, transmission of the transport block (Transport Block, TB) is repeated via the at least two sets of first information.

For example, the network side configures a plurality of type 1 and/or type 2 configured grants that are configured with at least two sets of first information. When data arrives, the UE can select only one type 1 configured grant or one activated type 2 configured grant to perform repetition.

In this embodiment of this application, the at least two sets of first information include one or more of the following: (1) at least two spatial relations; (2) at least two sets of power control parameters; and (3) at least two RV sequences, for example, the RV sequence is {0, 2, 3, 1}, or {0, 3, 0, 3}, or {0, 0, 0, 0}.

In this embodiment of this application, the first configured grant is a type 1 configured grant, and the at least two spatial relations of the first configured grant are configured by radio resource control (Radio Resource Control, RRC) on a network side.

In this embodiment of this application, the first configured grant is a type 2 configured grant, an HPN in DCI used to activate the first configured grant corresponds to an index of the first configured grant, and a channel sounding reference signal resource indicator (SRS resource indicator, SRI) field in the DCI indicates the at least two spatial relations.

Optionally, the SRI field in the DCI indicates the two spatial relations in the following two manners:
Manner 1-1: A first value of the SRI field in the DCI indicates a first set, the first set including the at least two spatial relations.

For example, RRC configures sets including the two spatial relations, and a value of the SRI field in the DCI indicates one set including the two spatial relations, correspondingly indicating the two spatial relations.

Manner 1-2: The SRI field in the DCI includes a first indication bit and a second indication bit, where the first indication bit indicates a first spatial relation in the at least two spatial relations, and the second indication bit indicates a second spatial relation in the at least two spatial relations.

For example, the SRI field is extended on an existing basis, for example, the SRI is extended to 4 bits of which the first two bits indicate one spatial relation and the last two bits indicate the other spatial relation.

In this embodiment of this application, the first configured grant is activated at least twice by multiple DCIs (for example, two DCIs), and the SRI fields in the multiple DCIs each indicate one spatial relation.

For example, the type 2 configured grant is activated at least twice by two DCIs. The two DCIs for activation are from different control resource sets (Control Resource Set, CORESET) and correspond to different CORESETPoolIndexes. The SRI fields in the two DCI for activation each indicate one spatial relation.

In this embodiment of this application, the first configured grant is a type 1 configured grant, and the power control parameters include one or more of the following:
(1-1) open-loop power control parameter;
for example, p0-PUSCH-Alpha of P0/Alpha;
(1-2) pathloss reference signal index (pathlossReferenceIndex); and
(1-3) closed-loop power control parameter (powerControlLoopToUse).

In this embodiment of this application, the first configured grant is a type 2 configured grant, and the power control parameters include one or more of the following:
(2-1) open-loop power control parameter;
for example, p0-PUSCH-Alpha of P0/Alpha; and
(2-2) closed-loop power control parameter (powerControlLoopToUse).

An SRI field in the DCI used to activate the first configured grant at least indicates two sets of pathloss reference signal parameters.

In this embodiment of this application, the power control parameters are indicated in the following manners:
Manner 2-1: A second value of the SRI field in the DCI indicates a second set, the second set including two sets of pathloss reference signal parameters.

For example, RRC configures sets including the two sets of pathloss reference signal parameters, and a value of the SRI in the DCI is mapped to one set including the two sets of pathloss reference signal parameters.

Manner 2-2: The SRI field in the DCI includes a third indication bit and a fourth indication bit, where the third indication bit indicates a first set of pathloss reference signal parameters in the at least two sets of pathloss reference signal parameters, and the fourth indication bit indicates a second set of pathloss reference signal parameters in the at least two sets of pathloss reference signal parameters.

For example, the SRI field is extended, for example, the SRI field is extended to 4 bits of which the first two bits indicate one set of pathloss reference signal parameters and the last two bits indicate the other set of pathloss reference signal parameters.

In this embodiment of this application, the first configured grant is a type 2 configured grant, and a transmit power control (Transmit Power Control, TPC) field in DCI (or referred as to a single DCI (single-DCI)) used to activate the first configured grant indicates at least two transmit power control commands.

The transmit power control field includes a fifth indication bit and a sixth indication bit, where the fifth indication bit indicates a transmit power control command corresponding to a first power control adjustment state, and the sixth indication bit indicates a transmit power control command corresponding to a second power control adjustment state.

For example, the TPC field is extended to 4 bits of which the first two bits indicate a TPC command corresponding to the first power control adjustment state and the last two bits indicate a TPC command corresponding to the second power control adjustment state.

Optionally, there are four power control adjustment states, and each set of power control parameters is used to maintain two power control adjustment states. In the foregoing case of two sets of power control parameter configurations, a value of a closed-loop power control parameter (powerControlLoopToUse) in a first set of configurations is "0" or "1", and a value of a closed-loop power control parameter (powerControlLoopToUse) configured in a second set of configurations is "2" or "3".

The first two bits of the TPC field extended correspond to the first set of configurations, and the last two bits correspond to the second set of configurations.

In this embodiment of this application, the at least two sets of power control parameters are in one-to-one correspondence with the at least two spatial relations.

In this embodiment of this application, a mapping between the at least two sets of power control parameters and time of repetition with the first configured grant is the same as a mapping between the at least two spatial relations and the time of repetition with the first configured grant. That is, in a case that the spatial relations are mapped according to a sequential mapping, the same sequential mapping needs to be used for mapping the two sets of power control parameters.

In this embodiment of this application, the mapping between the at least two spatial relations and the time of repetition with the first configured grant includes any one of the following:
(1) sequential mapping;
(2) cyclic mapping; and
(3) a first part of the time of repetition with the first configured grant corresponding to a first spatial relation and a rest second part of the time of repetition with the first configured grant corresponding to a second spatial relation.

For example, the first spatial relation is used in the first half part of the time of repetition with the first configured grant, and the second spatial relation is used in the rest half part of the repetition time.

It should be noted that for the type-B repetition, the foregoing mapping rules for the spatial relations are applied to nominal or actual repetition occasions.

In this embodiment of this application, an RV value of a repetition corresponding to the n-th transmission occasion in K repetitions on the first configured grant is the [((n-1) mod 4)+1]-th value in the RV sequence, K and n being positive integers.

For example, when the RV sequence is configured to {0, 2, 3, 1}, and the number of repetitions is 8, the n-th transmission occasion (n=4) in 8 repetitions is: ((n-1) mod 4)+1=4; then an RV value corresponding to the 4th transmission occasion in the 8 repetitions is the fourth value in the RV sequence {0, 2, 3, 1}, that is, "1".

In the embodiments of this application, reliability of transmitting data on a configured grant can be improved, and latency can be decreased.

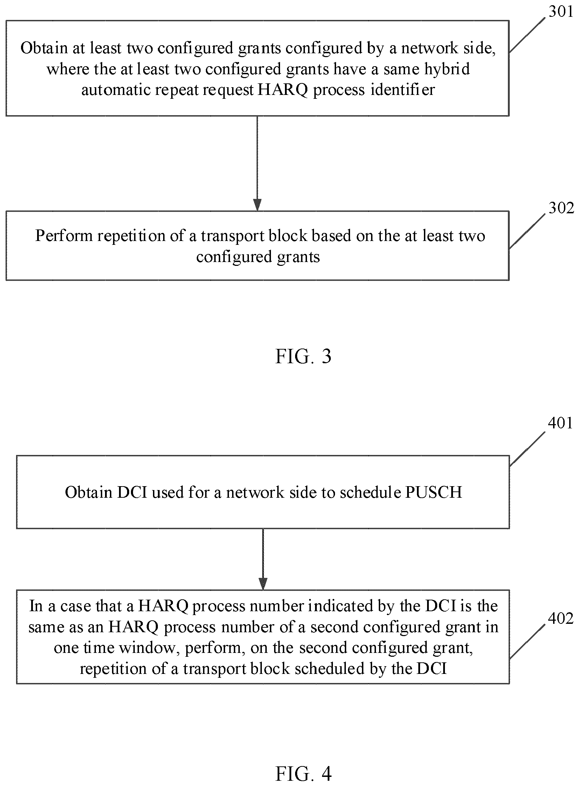

Refer to FIG. 3, which shows a method for repetition with configured grant provided in an embodiment of this application. The method is performed by a terminal, including specific steps: step 301 and step 302.

Step 301. Obtain at least two configured grants configured by a network side, where the at least two configured grants have a same HARQ process identifier.

Step 302. Perform repetition of a transport block based on the at least two configured grants.

That is, repetition of the transport block is performed via the at least two configured grants.

In this embodiment of this application, repetitions on the at least two configured grants are performed in one time window, where the time window is a configured grant timer (configuredGrantTimer) or another configurable time parameter.

For example, the network side configures and activates at least two configured grants having a same HARQ process identifier for the UE. The at least two configured grants are in one time window, and the time window may be configuredGrantTimer or another configurable time parameter. When a TB is transmitted on one configured grant, a time window timer is started. Within this timer, any configured grant having a same HARQ process identifier as this configured grant is allowed to transmit repetition of one TB. A HARQ process with this HARQ process identifier considers that a new data indicator (New Data Indicator, NDI) corresponding to the plurality of configured grants is not toggled.

In this embodiment of this application, the at least two configured grants are respectively associated with different TRPs.

In this embodiment of this application, the association with different TRPs means association with different control-resource set pool indexes (CORESET Pool Index).

In this embodiment of this application, the at least two configured grants include a type 1 configured grant and a type 2 configured grant.

A spatial relation corresponding to a transmission occasion of repetition with the type 1 configured grant is configured by RRC, or a spatial relation corresponding to a transmission time of repetition with the type 2 configured grant is indicated by DCI activating the type 2 configured grant.

Further optionally, spatial relations of configured grants are respectively mapped to transmission occasions of the configured grants.

In this embodiment of this application, the at least two configured grants include a type 1 configured grant and a type 2 configured grant. A power control parameter corresponding to the type 1 configured grant is configured by RRC, or a power control parameter corresponding to the type 2 configured grant is indicated by DCI activating the type 2 configured grant.

Further optionally, power control parameters corresponding to configured grants are respectively mapped to transmission occasions of the configured grants.

In this embodiment of this application, closed-loop power control parameters of configured grants associated with different CORESETPoolIndexes are independent of each other. In other words, TPC commands (command) from DCI of CORESET associated with a same CORESETPoolIndex can be used to perform closed-loop power control only on the configured grant associated with the same CORESETPoolIndex. Each CORESETPooLIndex is used to correspondingly maintain two power control adjustment states, with an index value 0 or 1.

In this embodiment of this application, a sum of repetitions on the at least two configured grants is a total number of repetitions.

In this embodiment of this application, RVs for repetitions on the at least two configured grants are selected from respective RV sequences configured for the configured grants, or selected from a same RV sequence.

In this embodiment of this application, one RV sequence is configured for at least two configured grants, and an RV value of a repetition corresponding to the n-th transmission occasion is the [((n-1) mod 4)+1]-th value in the RV sequence.

In this embodiment of this application, RV sequences are respectively configured for the at least two configured grants, where an RV value of a repetition on a configured grant corresponding to the n-th transmission occasion is the [((n-1) mod 4)+1]-th value in the RV sequence.

In this embodiment of this application, the at least two configured grants include a type 2 configured grant, and different DCIs used to activate the type 2 configured grant include a same HARQ process number, where the HARQ process number corresponds to a same index or different indexes of the type 2 configured grant, and the different DCIs correspond to different CORESETPoolIndexes.

For example, the type 2 configured grant can be activated via the following methods:
DCIs from different CORESETs and corresponding to different CORESETPoolIndexes are used to activate type 2 configured grants associated with respective CORESETPoolIndexes. Identical values of "HARQ process number" fields in the different DCIs are allowed to respectively indicate and activate type 2 configured grants having different indexes. The type 2 configured grants having different indexes are associated with different CORESETPoolIndex values.

Optionally, DCI used to activate a type 2 configured grant from one CORESET associated with one CORESETPoolIndex is allowed to activate a type 2 configured grant associated with another CORESETPoolIndex. Identical values of "HARQ process number" fields in the DCIs correspond to a same type 2 configured grants index.

In the embodiments of this application, reliability of transmitting data on a configured grant can be improved, and latency can be decreased.

Refer to FIG. 4, which shows a method for repetition with configured grant provided in an embodiment of this application. The method is performed by a terminal, including specific steps: step 401 and step 402.

Step 401. Obtain DCI used for a network side to schedule physical uplink shared channel (Physical Uplink Shared Channel, PUSCH).

Step 402. In a case that a HARQ process number (or configured grant) indicated by the DCI is the same as a HARQ process number of a second configured grant in one time window, perform, on the second configured grant, repetition of a transport block scheduled by the DCI.

For example, the network side configures at least one type 1 and/or type 2 configured grant that is associated with a CORESETPoolIndex. When the network side uses the DCI to dynamically schedule one PUSCH, in a case that a HARQ process number indicated by the DCI is the same as a HARQ process number of the configured grant in one time window, it is regarded that a TB scheduled by the DCI is allowed to be retransmitted on the configured grant with the same HARQ process number.

In this embodiment of this application, a CORESETPoolIndex associated with the second configured grant is the same as or different from the CORESETPoolIndex corresponding to the DCI.

Specifically, when a PUSCH transmission scheduled by DCI occurs, the HARQ process corresponding to the PUSCH starts the configuredGrantTimer. During the operation of the configuredGrantTimer, another configured grant having a same HARQ process index as the PUSCH can also be used to transmit repetition of one TB scheduled by the DCI.

The time window may be another timer whose time length can be configured.

In this embodiment of this application, a total number of repetitions of the transport block is a sum of the number of repetitions scheduled by the DCI and the number of repetitions on the second configured grant. In other words, a total number of repetitions of a TB is a sum of the number of repetitions scheduled by DCI and a total number of repetitions on the second configured grant.

In this embodiment of this application, spatial relations are separately configured for the PUSCH and the second configured grant. In other words, the dynamically scheduled PUSCH and the configured grant use their respective spatial relations configured or indicated.

In this embodiment of this application, power control parameters used for a transmission on the second configured grant are the same as those used for scheduling by the DCI.

In this embodiment of this application, power control adjustment states of the second configured grant and the PUSCH are independent of each other.

For example, power control parameters used for scheduling by the DCI can be used for a transmission on the second configured grant. Optionally, the transmission on the second configured grant is performed by using its configured or indicated power control parameters. Power control adjustment states of the second configured grant and the dynamically scheduled PUSCH are independent of each other. Even with a same power control adjustment state index, the second configured grant and the dynamically scheduled PUSCH may also correspond to different power control adjustment state processes.

In this embodiment of this application, an RV used for transmission on the second configured grant is selected from an RV sequence indicated by the scheduling DCI.

For example, the redundancy version used for the transmission on the second configured grant can be in a same RV sequence as that indicated by the scheduling DCI, and a global counting manner is used to select the redundancy version from the RV sequence.

Optionally, the transmission on the second configured grant uses an RV sequence configured for the transmission, and the redundancy version corresponding to each transmission occasion is obtained by counting transmission occasions for the second configured grant. The redundancy version of the repetition corresponding to the n-th transmission occasion is the [((n-1) mod 4)+1]-th value in the RV sequence, where n is obtained by counting repetition occasions for the second configured grant.

In the embodiments of this application, reliability of transmitting data on a configured grant can be improved, and latency can be decreased.

The following describes the embodiments of this application with reference to Embodiment 1 to Embodiment 7.

### Embodiment 1

One type 1 Configured Grant (type 1 CG for short) is configured with at least two spatial relations or two sets of power control parameters, and DCI used to activate a type 2 Configured Grant (type 2 CG for short) indicates at least two spatial relations or two sets of power control parameters. A repetition of one TB is mapped to different spatial relation indication information (spatial transmit beam) and is transmitted by using different transmit power.

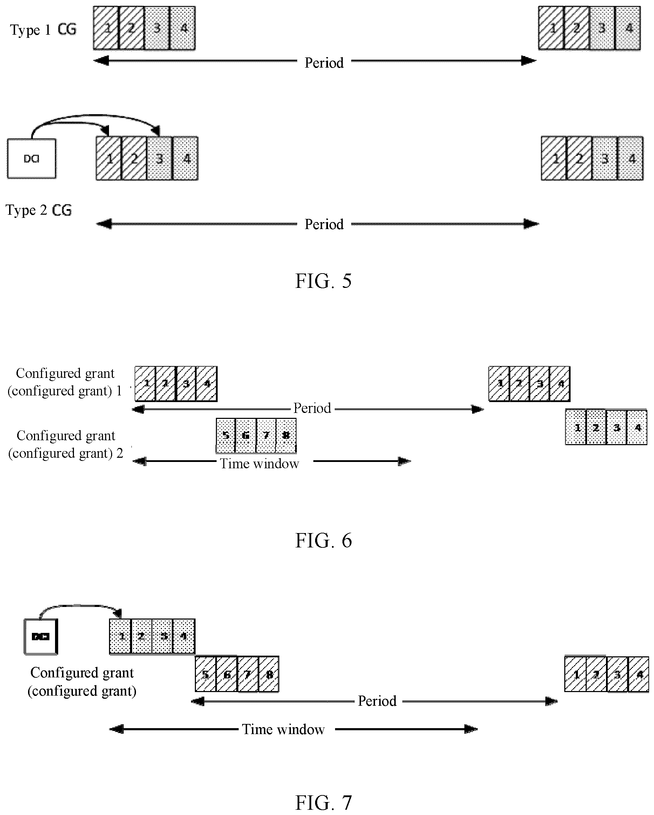

As shown in FIG. 5, the number of repetitions is 4. A mapping between repetition occasions and spatial relations or power control parameters may be sequential mapping. That is, the first and the second transmissions are performed using a first spatial relation or a first set of power control parameters, and the third and the fourth transmissions are performed using a second spatial relation or a second set of power control parameters. Alternatively, the mapping can be cyclic mapping. That is, the first and the third transmission occasions use a first spatial relation or a first set of power control parameters, and the second and the fourth transmission occasions use a second spatial relation or a second set of power control parameters. Spatial relations are bound with transmission occasions. After arriving, data is transmitted by using a spatial relation or power control parameters corresponding to a transmission occasion on which the data is to be transmitted.

### Embodiment 2

This embodiment is associated with Embodiment 1 of this application. For the type 2 Configured Grant, multiple DCIs corresponding to different CORESETPoolIndexes from different CORESETs can be simultaneously used to activate a same type 2 Configured Grant configuration.

For example, a "HARQ process number" in a DCI format used to activate a type 2 Configured Grant from a CORESET having CORESETPoolIndex=0 is equal to 1, which means that the DCI activates the type 2 Configured Grant having an index being 1. The UE stores information of the Configured Grant when receiving the DCI for activation. At this point, when the UE receives the DCI format, used to activate the type 2 Configured Grant, including "HARQ process number" being 1 that is from the CORESET associated with CORESETPoolIndex=1, the terminal stores the information such as an SRI, a transmitted precoding matrix indicator (Transmitted Precoding Matrix Indicator, TPMI), and TPC in the DCI. So far the terminal obtains two sets of transmission information including two spatial relations or two sets of power control parameters.

### Embodiment 3

The network side configures and activates at least two type 1 and/or type 2 Configured Grants for the UE, and each of the Configured Grants is associated with one CORESETPoolIndex. The two Configured Grants have a same period, without a HARQ process ID offset configured or with an offset value 0 configured, and a time difference between first transmission occasions of the two Configured Grants is less than one period. In this case, according to a rule determined based on Configured Grant HARQ process indexes, HARQ processes of the two Configured Grants completely overlap.

UE is allowed to perform repetitions on the two Configured Grants having a same HARQ process, for example, Configured grant 1 and Configured grant 2. As shown in FIG. 6, the Configured Grant 1 is associated with CORESETPoolIndex=0 and is configured with a spatial relation or a set of power control parameters, and TRP2 is associated with CORESETPoolIndex=1 and is configured with another spatial relation or another set of power control parameters. One TB of the UE can be retransmitted in totally eight repetition occasions on the two Configured Grants as shown in the figure. Transmit spatial beam information and power control parameters of each repetition occasion are determined by the two Configured Grant configurations.

### Embodiment 4

A plurality of type 2 configured grants associated with a CORESETPoolIndex are activated by DCIs used to activate type 2 Configured Grants from a CORESET associated with the corresponding CORESETPoolIndex. The same value of the "HARQ process number" field in the DCIs corresponds to different indexes of type 2 Configured Grants of different TRPs. The correspondence is shown in Table 1:

**Table 1**

| | HARQ process number | Type 2 Configured Grant index | |
|---|---|---|---|
| (CORESETPoolIndex0) DCI | 0 | 0 | Configured Grant indexes associated with CORESETPoolIndex0 |
| | 1 | 1 | |
| | 2 | 2 | |
| | 3 | 3 | |
| | 4 | 4 | |
| | 5 | 5 | |
| | 6 | 6 | |
| | 7 | 7 | |
| | 8 | 8 | |
| | 9 | 9 | |
| | 10 | 10 | |
| | 11 | 11 | |
| | Reserved | | |
| (CORESETPoolIndex1) DCI | 0 | 12 | Configured Grant indexes associated with CORESETPoolIndex 1 |
| | 1 | 13 | |
| | 2 | 14 | |
| | 3 | 15 | |
| | 4 | 16 | |
| | 5 | 17 | |
| | 6 | 18 | |
| | 7 | 19 | |
| | 8 | 20 | |
| | 9 | 21 | |
| | 10 | 22 | |
| | 11 | 23 | |

### Embodiment 5

This embodiment is associated with Embodiment 3. DCI used to activate the Configured Grant focuses on only the "HARQ process number" field, without considering which CORESET a type 2CORESETPoolIndex corresponds to. In this case, DCI from one TRP is allowed to activate a type 2 Configured Grant associated with another TRP. For an activation correspondence between the "HARQ process number" field in DCI and the type 2 Configured Grant index, refer to table 2 and table 3:

In table 2, index values are allocated uniformly for all type 2 Configured Grant configurations, and a value of the "HARQ process number" field in DCI used to activate a type 2 Configured Grant corresponds to the type 2 Configured Grant index that is activated. This DCI may come from a CORESET corresponding to any CORESETPoolIndex.

**Table 2**

| HARQ process number | Type 2 Configured Grant index |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | 10 |
| 11 | 11 |
| Reserved | |

In Table 3, the highest bit of the "HARQ process number" field used to activate a type 2 Configured Grant is used to indicate a type 2 Configured Grant associated which CORESETPoolIndex is to be activated by the DCI, and the value of the lowest three bits indicate an index of the type 2 Configured Grant activated under the corresponding CORESETPoolIndex.

**Table 3**

| Highest bit of HARQ process number | Value of lowest three bits of HARQ process number | Type 2 Configured Grant index |
|---|---|---|
| 0 (indicating CORESETPoolIndex 0) | 0 | 0 |
| | 1 | 1 |
| | 2 | 2 |
| | 3 | 3 |
| | 4 | 4 |
| | 5 | 5 |
| | Reserved | |
| 1 (indicating CORESETPoolIndex 1) | 0 | 6 |
| | 1 | 7 |
| | 2 | 8 |
| | 3 | 9 |
| | 4 | 10 |
| | 5 | 11 |
| | Reserved | |

### Embodiment 6

This embodiment is associated with Embodiment 3 and is used for repetition with two Configured Grants.
(1) Each Configured Grant configures an RV sequence separately, and a redundancy version of a repetition corresponding to the n-th transmission occasion is the [((n-1) mod 4)+1]-th value in an RV sequence, where n is a count of transmission occasions on one same Configured Grant.
(2) An RV sequence configured in a Configured Grant associated with CORESETPoolIndex=0 is used as an RV sequence used for repetitions. A redundancy version of a repetition corresponding to the n-th transmission occasion is the [((n-1) mod 4)+1]-th value in the RV sequence, where n is a count of transmission occasions on two Configured Grants.

### Embodiment 7

The network side configures and activates at least one configured grant associated with a CORESETPoolIndex for the UE. When the network dynamically schedules PUSCH, a HARQ process index indicated by DCI is the same as that of a Configured Grant, configuredGrantTimer is running, and a repetition of a TB scheduled by the DCI is allowed to be transmitted on the Configured Grant. A CORESETPoolIndex associated with the DCI is different from that with the Configured Grant.

As shown in FIG. 7, DCI from a CORESET associated with CORESETPoolIndex=0 dynamically schedules PUSCH repetitions, and the number of transmissions is 4. A HARQ process identifier of a Configured Grant associated with CORESETPoolIndex=1 is the same as a HARQ process indicated in the DCI, and a TB scheduled by the DCI is allowed to be retransmitted continuously on the Configured Grant. An NDI corresponding to the Configured Grant is not toggled. Transmit spatial beam information or power control parameters of the first to the fourth repetitions are indicated by DCI, and the fifth to eighth repetitions are configured by RRC or indicated by DCI used to activate type 2 Configured Grant.

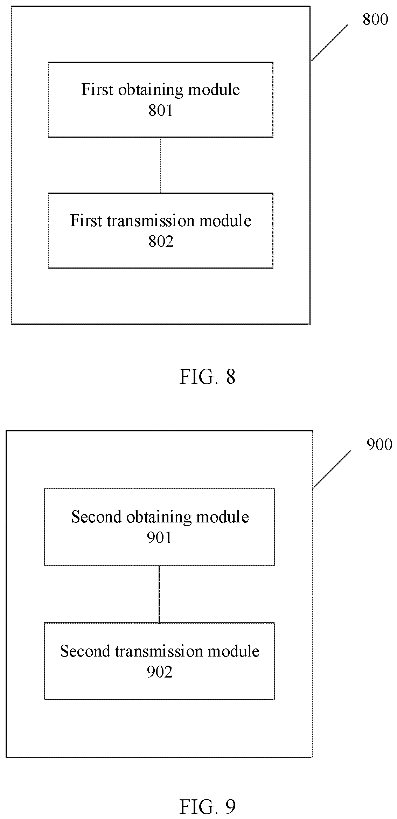

Refer to FIG. 8, which shows an apparatus for repetition with configured grant according to an embodiment of this application, where the apparatus is applied to a terminal. The apparatus 800 includes:
a first obtaining module 801, configured to obtain a first configured grant configured by a network side, where the first configured grant is configured with at least two sets of first information; and
a first transmission module 802, configured to perform repetition of a transport block based on the at least two sets of first information.

In this embodiment of this application, the at least two sets of first information include one or more of the following: at least two spatial relations; at least two sets of power control parameters; and at least two RV sequences.

In this embodiment of this application, the first configured grant is a type 1 configured grant, and the at least two spatial relations of the first configured grant are configured via RRC by a network side.

In this embodiment of this application, the first configured grant is a type 2 configured grant, an HPN in DCI used to activate the first configured grant corresponds to an index of the first configured grant, and an SRI field in the DCI indicates the at least two spatial relations.

In this embodiment of this application, a first value of the SRI field in the DCI indicates a first set, the first set including the at least two spatial relations. Alternatively, the SRI field in the DCI includes a first indication bit and a second indication bit, where the first indication bit indicates a first spatial relation in the at least two spatial relations, and the second indication bit indicates a second spatial relation in the at least two spatial relations.

In this embodiment of this application, the first configured grant is activated at least twice by multiple DCIs, and SRI fields in the multiple DCIs separately indicate a spatial relation.

In this embodiment of this application, the first configured grant is a type 1 configured grant, and the power control parameters include one or more of the following: an open-loop power control parameter (p0-PUSCH-Alpha), a pathloss reference signal index, and a closed-loop power control parameter.

In this embodiment of this application, the first configured grant is a type 2 configured grant, and the power control parameters include one or more of the following: an open-loop power control parameter and a closed-loop power control parameter; where an SRI field in DCI used to activate the first configured grant at least indicates two sets of pathloss reference signal parameters.

In this embodiment of this application, a second value of the SRI field in the DCI indicates a second set, the second set including two sets of pathloss reference signal parameters. Alternatively, the SRI field in the DCI includes a third indication bit and a fourth indication bit, where the third indication bit indicates a first set of pathloss reference signal parameters in the at least two sets of pathloss reference signal parameters, and the fourth indication bit indicates a second set of pathloss reference signal parameters in the at least two sets of pathloss reference signal parameters.

In this embodiment of this application, the first configured grant is a type 2 configured grant, and a transmit power control field in DCI used to activate the first configured grant indicates at least two transmit power control commands.

The transmit power control field includes a fifth indication bit and a sixth indication bit, where the fifth indication bit indicates a transmit power control command corresponding to a first power control adjustment state, and the sixth indication bit indicates a transmit power control command corresponding to a second power control adjustment state.

In this embodiment of this application, each set of power control parameters corresponds to at least two power control adjustment states.

In this embodiment of this application, the at least two sets of power control parameters are in one-to-one correspondence with the at least two spatial relations.

In this embodiment of this application, a mapping between the at least two sets of power control parameters and time of repetition with the first configured grant is the same as a mapping between the at least two spatial relations and the time of repetition with the first configured grant.

In this embodiment of this application, a mapping between the at least two spatial relations and the time of repetition with the first configured grant includes: sequential mapping; cyclic mapping; or, a first part of the time of repetition with the first configured grant corresponding to a first spatial relation, and a rest second part of the time of repetition with the first configured grant corresponding to a second spatial relation.

In this embodiment of this application, the RV sequence is {0, 2, 3, 1}, or {0, 3, 0, 3}, or {0, 0, 0, 0}.

In this embodiment of this application, an RV value of a repetition corresponding to the n-th transmission occasion in K repetitions on the first configured grant is the [((n-1) mod 4)+1]-th value in the RV sequence, K being a positive integer.

The apparatus provided in this embodiment of this application can implement the processes implemented in the method embodiment in FIG. 2, with the same technical effects achieved. To avoid repetition, details are not described herein again.

Refer to FIG. 9, which shows an apparatus for repetition with configured grant according to an embodiment of this application, where the apparatus is applied to a terminal. The apparatus 900 includes:
a second obtaining module 901, configured to obtain at least two configured grants configured by a network side, where the at least two configured grants have a same hybrid automatic repeat request HARQ process identifier; and
a second transmission module 902, configured to preform repetition of a transport block based on the at least two configured grants.

In this embodiment of this application, repetitions on the at least two configured grants are performed in one time window, where the time window is a configured grant timer or another configurable time parameter.

In this embodiment of this application, the at least two configured grants are respectively associated with different transmission and reception points TRPs.

In this embodiment of this application, the association with different TRPs means association with different control-resource set pool indexes CORESETPoolIndexes.

In this embodiment of this application, the at least two configured grants include a type 1 configured grant and a type 2 configured grant.

A spatial relation corresponding to a transmission occasion of a repetition on the type 1 configured grant is configured by RRC, or a spatial relation corresponding to a transmission time of a repetition on the type 2 configured grant is indicated by DCI activating the type 2 configured grant.

In this embodiment of this application, the at least two configured grants include a type 1 configured grant and a type 2 configured grant. A power control parameter corresponding to the type 1 configured grant is configured by RRC, or a power control parameter corresponding to the type 2 configured grant is indicated by DCI activating the type 2 configured grant.

In this embodiment of this application, closed-loop power control parameters of configured grants associated with different CORESETPoolIndexes are independent of each other.

In this embodiment of this application, a sum of repetitions on the at least two configured grants is a total number of repetitions.

In this embodiment of this application, RVs for repetitions on the at least two configured grants are selected from respective RV sequences configured for the configured grants, or selected from a same RV sequence.

In this embodiment of this application, one RV sequence is configured for at least two configured grants, and an RV value of a repetition corresponding to the n-th transmission occasion is the [((n-1) mod 4)+1]-th value in the RV sequence.

In this embodiment of this application, RV sequences are respectively configured for the at least two configured grants, where an RV value of a repetition on a configured grant corresponding to the n-th transmission occasion is the [((n-1) mod 4)+1]-th value in the RV sequence.

In this embodiment of this application, the at least two configured grants include a type 2 configured grant, and different DCIs used to activate the type 2 configured grant include a same HARQ process number, where the HARQ process number corresponds to a same index or different indexes of the type 2 configured grant, and the different DCIs correspond to different CORESETPoolIndexes.

The apparatus provided in this embodiment of this application can implement the processes implemented in the method embodiment in FIG. 3, with the same technical effects achieved. To avoid repetition, details are not described herein again.

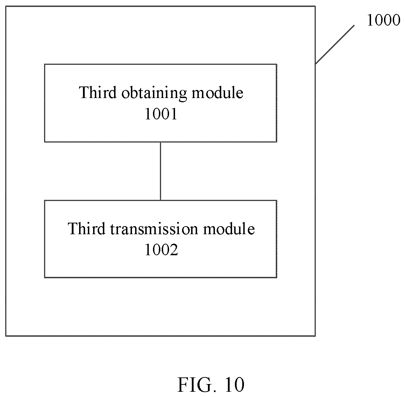

Refer to FIG. 10, which shows an apparatus for repetition with configured grant according to an embodiment of this application, where the apparatus is applied to a terminal. The apparatus 1000 includes:
a third obtaining module 1001, configured to obtain DCI used for a network side to schedule PUSCH; and
a third transmission module 1002, configured to: in a case that a HARQ process number indicated by the DCI is the same as a HARQ process number of a second configured grant in one time window, perform, on the second configured grant, repetition of a transport block scheduled by the DCI.

In this embodiment of this application, CORESETPoolIndex associated with the second configured grant is the same as or different from CORESETPoolIndex corresponding to the DCI.

In this embodiment of this application, a total number of repetitions of the transport block is a sum of the number of repetitions scheduled by the DCI and the number of repetitions on the second configured grant.

In this embodiment of this application, spatial relations are separately configured for the PUSCH and the second configured grant.

In this embodiment of this application, power control parameters used for a transmission on the second configured grant is the same as those used for scheduling by the DCI.

In this embodiment of this application, power control adjustment states of the second configured grant and the PUSCH are independent of each other.

In this embodiment of this application, an RV used for transmission on the second configured grant is selected from an RV sequence indicated by the scheduling DCI.

The apparatus provided in this embodiment of this application can implement the processes implemented in the method embodiment in FIG. 4, with the same technical effects achieved. To avoid repetition, details are not described herein again.

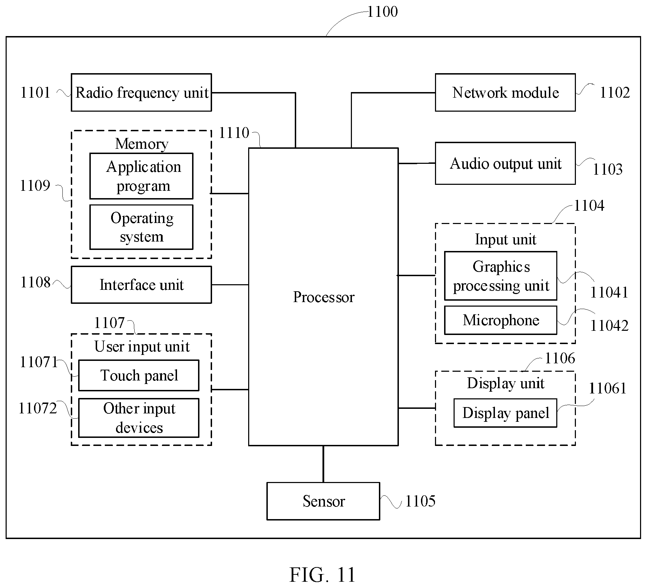

FIG. 11 is a schematic diagram of a hardware structure of a terminal for implementing the embodiments of this application.

The terminal 1100 includes but is not limited to components such as a radio frequency unit 101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (for example, a battery) that supplies power to the components. The power supply may be logically connected to the processor 1110 through via power management system. In this way, functions such as charge management, discharge management, and power consumption management are implemented via the power management system. The terminal structure shown in FIG. 11 does not constitute any limitation on the terminal. The terminal may include more or fewer components than shown in the figure, or a combination of some components, or have different arrangements of the components. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in an image capture mode or a video capture mode. The display unit 1106 may include a display panel 11061, and the display panel 11061 may be configured in a form of a liquid crystal display, an organic light-emitting diode display, and the like. The user input unit 1107 includes a touch panel 11071 and other input devices 11072. The touch panel 11071 is also referred to as a touchscreen. The touch panel 11071 may include two parts: a touch detection apparatus and a touch controller. The other input devices 11072 may include but be not limited to a physical keyboard, a function key (such as a volume control key or an on/off key), a trackball, a mouse, and a joystick. Details are not described herein.

In this embodiment of this application, the radio frequency unit 1101 sends downlink data received from a network-side device to the processor 1110 for processing, and in addition, sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may mainly include a program or instruction storage region and a data storage region. The program or instruction storage region may store an operating system, an application program or instructions required by at least one function (for example, an audio play function or an image play function), and the like. In addition, the memory 1109 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one disk storage device, a flash memory device, or another volatile solid-state storage device.

The processor 1110 may include one or more processing units. Optionally, the processor 1110 may integrate an application processor and a modem processor. The application processor mainly processes an operating system, a user interface, application programs or instructions, or the like. The modem processor mainly processes wireless communication, for example, a baseband processor. It can be understood that the modem processor may be alternatively not integrated in the processor 1110.

The terminal provided by the embodiments of this application can realize the processes realized in the method embodiment of FIG. 2, FIG. 3, or FIG. 4, with the same technical effects achieved. To avoid repetition, details are not described herein again.

An embodiment of this application further provides a program product, where the program product is stored in a non-volatile storage medium, and the program product is executed by at least one processor to implement the steps of processing method described in FIG. 2, FIG. 3, or FIG. 4.

An embodiment of this application further provides a readable storage medium. The readable storage medium stores a program or instructions. When the program or instructions are executed by a processor, the processes of the method embodiment shown in FIG. 2, FIG. 3, or FIG. 4 are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or instructions for a network-side device, to implement the processes of the method embodiment shown in FIG. 2, FIG. 3, or FIG. 4, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When implemented in a form of a software functional unit and sold or used as an independent product, the functions may be stored in a computer-readable storage medium. Based on such an understanding, the technical solutions of this disclosure essentially, or the part contributing to the prior art, or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may be a magnetic disk, an optical disc, a read-only memory (Read-Only Memory, ROM), or a random access memory (Random Access Memory, RAM).

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for repetition with configured grant, applied to a terminal, wherein the method for repetition with configured grant comprises:
obtaining a first configured grant configured by a network side, wherein the first configured grant is configured with at least two sets of first information; and
performing repetition of a transport block based on the at least two sets of first information.

2. The method according to claim 1, wherein the at least two sets of first information comprise one or more of the following:
at least two spatial relations;
at least two sets of power control parameters; and
at least two redundancy version RV sequences.

3. The method according to claim 2, wherein the first configured grant is a type 1 configured grant, and the at least two spatial relations of the first configured grant are configured via radio resource control RRC by a network side.

4. The method according to claim 2, wherein the first configured grant is a type 2 configured grant, a hybrid automatic repeat request process number HPN in downlink control information DCI used to activate the first configured grant corresponds to an index of the first configured grant, and a channel sounding reference signal resource indicator SRI field in the DCI indicates the at least two spatial relations.

5. The method according to claim 4, wherein a first value of the SRI field in the DCI indicates a first set, the first set comprising the at least two spatial relations;
or
the SRI field in the DCI comprises a first indication bit and a second indication bit, wherein the first indication bit indicates a first spatial relation in the at least two spatial relations, and the second indication bit indicates a second spatial relation in the at least two spatial relations.

6. The method according to claim 4, wherein the first configured grant is activated at least twice by multiple DCIs, and SRI fields in the multiple DCIs separately indicate one spatial relation.

7. The method according to claim 2, wherein
the first configured grant is a type 1 configured grant, and the power control parameter comprises one or more of the following: an open-loop power control parameter, a pathloss reference signal index, and a closed-loop power control parameter.

8. The method according to claim 2, wherein the first configured grant is a type 2 configured grant, and the power control parameter comprises one or more of the following: an open-loop power control parameter and a closed-loop power control parameter; wherein
an SRI field in DCI used to activate the first configured grant at least indicates two sets of pathloss reference signal parameters.

9. The method according to claim 8, wherein a second value of the SRI field in the DCI indicates a second set, the second set comprising two sets of pathloss reference signal parameters;
or
the SRI field in the DCI comprises a third indication bit and a fourth indication bit, wherein the third indication bit indicates a first set of pathloss reference signal parameters in the at least two sets of pathloss reference signal parameters, and the fourth indication bit indicates a second set of pathloss reference signal parameters in the at least two sets of pathloss reference signal parameters.

10. The method according to claim 2, wherein the first configured grant is a type 2 configured grant, and a transmit power control field in DCI used to activate the first configured grant indicates at least two transmit power control commands; and
the transmit power control field comprises a fifth indication bit and a sixth indication bit, wherein the fifth indication bit indicates a transmit power control command corresponding to a first power control adjustment state, and the sixth indication bit indicates a transmit power control command corresponding to a second power control adjustment state.

11. The method according to claim 2, wherein each set of power control parameters corresponds to at least two power control adjustment states.

12. The method according to claim 2, wherein the at least two sets of power control parameters are in one-to-one correspondence with the at least two spatial relations.

13. The method according to claim 2, wherein a mapping between the at least two sets of power control parameters and time of repetition with the first configured grant is the same as a mapping between the at least two spatial relations and the time of repetition with the first configured grant.

14. The method according to claim 2 or 13, wherein the mapping between the at least two spatial relations and the time of repetition with the first configured grant comprises:
sequential mapping;
or
cyclic mapping
or
a first part of the repetition time with the first configured grant corresponding to a first spatial relation, and a rest second part of the repetition time with the first configured grant corresponding to a second spatial relation.

15. The method according to claim 2, wherein the RV sequence is {0, 2, 3, 1}, or {0, 3, 0, 3}, or {0, 0, 0, 0}.

16. The method according to claim 15, wherein an RV value of a repetition corresponding to the n-th transmission occasion in K repetitions on the first configured grant is the [((n-1) mod 4)+1]-th value in the RV sequence, K being a positive integer.

17. A method for repetition with configured grant, applied to a terminal, wherein the method for repetition with configured grant comprises:
obtaining at least two configured grants configured by a network side, wherein the at least two configured grants have a same hybrid automatic repeat request HARQ process identifier; and
performing repetition transmission of a transport block based on the at least two configured grants.

18. The method according to claim 17, wherein repetitions on the at least two configured grants are performed in one time window, wherein the time window is a configured grant timer or another configurable time parameter.

19. The method according to claim 17, wherein the at least two configured grants are respectively associated with different transmission and reception points TRP.

20. The method according to claim 19, wherein the association with different TRPs means association with different control-resource set pool indexes CORESETPoolIndex.

21. The method according to claim 17, wherein the at least two configured grants comprise: a type 1 configured grant and a type 2 configured grant; wherein
a spatial relation corresponding to a transmission occasion of a repetition on the type 1 configured grant is configured by RRC, or a spatial relation corresponding to a transmission time of a repetition on the type 2 configured grant is indicated by DCI activating the type 2 configured grant.

22. The method according to claim 17, wherein the at least two configured grants comprise: a type 1 configured grant and a type 2 configured grant; wherein a power control parameter corresponding to the type 1 configured grant is configured by RRC, or a power control parameter corresponding to the type 2 configured grant is indicated by DCI activating the type 2 configured grant.

23. The method according to claim 20, wherein
closed-loop power control parameters of configured grants associated with different CORESETPoolIndexes are independent of each other.

24. The method according to claim 17, wherein a sum of repetitions on the at least two configured grants is a total number of repetitions.

25. The method according to claim 17, wherein RVs for repetitions the at least two configured grants are selected from respective RV sequences configured for the configured grants, or selected from a same RV sequence.

26. The method according to claim 25, wherein one RV sequence is configured for at least two configured grants, and an RV value of a repetition corresponding to the n-th transmission occasion is the [((n-1) mod 4)+1]-th value in the RV sequence.

27. The method according to claim 25, wherein RV sequences are respectively configured for the at least two configured grants, wherein an RV value of a repetition on one of the configured grants corresponding to the n-th transmission occasion is the [((n-1) mod 4)+1]-th value in the RV sequence.

28. The method according to claim 17, wherein the at least two configured grants comprise a type 2 configured grant, and different DCIs used to activate the type 2 configured grant comprise a same HARQ process number, wherein the HARQ process number corresponds to a same index or different indexes of the type 2 configured grant, and the different DCIs correspond to different CORESETPoolIndexes.

29. A method for repetition with configured grant, applied to a terminal, wherein the method for repetition with configured grant comprises:
obtaining DCI used for a network side to schedule physical uplink shared channel a network side; and
in a case that a HARQ process number indicated by the DCI is the same as a HARQ process number of a second configured grant in one time window, performing, on the second configured grant, repetition of a transport block scheduled by the DCI.

30. The method according to claim 29, wherein a CORESETPoolIndex associated with the second configured grant is the same as or different from a CORESETPoolIndex corresponding to the DCI.

31. The method according to claim 29, wherein a total number of repetitions of the transport block is a sum of the number of repetitions scheduled by the DCI and the number of repetitions on the second configured grant.

32. The method according to claim 29, wherein spatial relations are separately configured for the PUSCH and the second configured grant.

33. The method according to claim 29, wherein power control parameters used for a transmission on the second configured grant are the same as those used for scheduling by the DCI.

34. The method according to claim 29, wherein power control adjustment states of the second configured grant and the PUSCH are independent of each other.

35. The method according to claim 29, wherein an RV for a transmission on the second configured grant is selected from an RV sequence indicated by scheduling by the DCI.

36. An apparatus for repetition with configured grant, applied to a terminal, wherein the apparatus for repetition with configured grant comprises:
a first obtaining module, configured to obtain a first configured grant configured by a network side, wherein the first configured grant is configured with at least two sets of first information; and
a first transmission module, configured to perform repetition of a transport block based on the at least two sets of first information.

37. An apparatus for repetition with configured grant, applied to a terminal, wherein the apparatus for repetition with configured grant comprises:
a second obtaining module, configured to obtain at least two configured grants configured by a network side, wherein the at least two configured grants have a same hybrid automatic repeat request HARQ process identifier; and
a second transmission module, configured to perform repetition of a transport block based on the at least two configured grants.

38. An apparatus for repetition with configured grant, applied to a terminal, wherein the apparatus for repetition with configured grant comprises:
a third obtaining module, configured to obtain DCI used for a network side to schedule PUSCH; and
a third transmission module, configured to: in a case that a HARQ process number indicated by the DCI is the same as a HARQ process number of a second configured grant in one time window, perform, on the second configured grant, repetition of a transport block scheduled by the DCI.

39. A terminal, comprising a processor, a memory, and a program stored in the memory and capable of running on the processor, wherein when the program is executed by the processor, the steps of the method according to any one of claims 1 to 35 are implemented.

40. A readable storage medium, wherein the readable storage medium stores a program or instructions, wherein when the program or instructions are executed by a processor, the steps of the method for repetition with configured grant according to any one of claims 1 to 16 or the steps of the method for repetition with configured grant according to any one of claims 17 to 27 or the steps of the method for repetition with configured grant according to any one of claims 28 to 35 are implemented.
